# FASCICULE DE BREVET EUROPEEN

(11) **EP 3 991 028 B1**
(45) Date de publication et mention de la délivrance du brevet: **29.05.2024**
(21) Numéro de dépôt: 20747033.7
(22) Date de dépôt: 24.06.2020
(51) Int. Cl.: G06F 8/53, G06F 8/75, G06F 8/74, G06F 21/52, G06F 9/455, G06F 11/30

(54) **PROCEDE ITERATIF ET DISPOSITIF DE DETECTION D'UNE ZONE APPROXIMATIVE OCCUPEE PAR LE CODE INFORMATIQUE D'UN NOYAU D'UN SYSTEME D'EXPLOITATION DANS UNE MEMOIRE**
ITERATIVES VERFAHREN UND VORRICHTUNG ZUR ERKENNUNG EINER UNGEFÄHREN ZONE, DIE DURCH DEN RECHNERCODE EINES BETRIEBSSYSTEMKERNS IN EINEM SPEICHER BELEGT IST
ITERATIVE METHOD AND DEVICE FOR DETECTING AN APPROXIMATE ZONE OCCUPIED BY THE COMPUTER CODE OF AN OPERATING SYSTEM CORE IN A MEMORY

(30) Priorité: 28.06.2019 FR 1907160
(43) Date de publication de la demande: 04.05.2022
(73) Titulaire: Orange, 92130 Issy-les-Moulineaux (FR)
(72) Inventeur: HEBBAL, Yacine, 92326 CHÂTILLON CEDEX (FR)
(74) Mandataire: Cabinet Beau de Loménie
(86) Numéro de dépôt international: PCT/FR2020/051100
(87) Numéro de publication internationale: WO 2020/260823

(56) Documents cités:
- US-A1- 2015 096 028
- Yacine Hebbal: "Semantic monitoring mechanisms dedicated to security monitoring in IaaS cloud", , 18 septembre 2017 (2017-09-18), XP055673201, Extrait de l'Internet: URL:https://tel.archives-ouvertes.fr/tel-0 1797056/document [extrait le 2020-03-03]

## Description

### Arrière-plan de l'invention

L'invention se rapporte au domaine général de la supervision de code informatique.

Elle vise plus particulièrement un procédé et un dispositif pour détecter une zone occupée par du code informatique.

L'invention s'applique de façon privilégiée mais non limitative pour détecter l'emplacement d'un code noyau s'exécutant dans la mémoire d'une machine virtuelle.

Dans ce contexte, l'invention peut être mise en oeuvre par un hyperviseur ou par un dispositif tiers utilisant des fonctions de gestion mémoire d'un hyperviseur.

En effet, l'emplacement du code noyau dans la mémoire d'une machine virtuelle est inconnu de l'hyperviseur. De plus, cet emplacement varie selon le type et la version du système d'exploitation de la machine virtuelle et est susceptible de changer de façon aléatoire après chaque redémarrage de la machine virtuelle.

On connait principalement deux techniques pour identifier automatiquement l'emplacement du code noyau d'une machine virtuelle depuis un hyperviseur.

La première technique tente d'identifier l'emplacement du code noyau par l'identification des fonctions de ce dernier à travers leurs marqueurs dans un code binaire. Mais cette première technique ne fonctionne pas sur un code noyau optimisé dans lequel les marqueurs de fonctions sont quasiment inexistants.

La deuxième technique tente d'identifier l'emplacement du code noyau par l'identification d'une première instruction arbitraire dans le noyau de la machine virtuelle, le reste du code noyau qui se situe avant et après cette instruction étant obtenus via un mécanisme de désassemblage jusqu'à la détection d'une donnée, marquant la frontière du code noyau avec les données noyau. Cette deuxième technique suppose que le code noyau est contigu et qu'il n'existe pas de données au milieu du code. Cette technique n'est donc pas efficace dans le cas où des données sont présentes au milieu du code noyau comme il est le cas du noyau Windows (marque déposée).

Ces techniques ne sont donc pas satisfaisantes.

Le document "Semantic monitoring mechanisms dedicated to securitv monitoring in IaaS cloud, Yacine Hebbal, HAL Id: tel-01797056,https://theses.hal.science/tel-01797056, Submitted on 22 May 2018" décrit une solution pour automatiser l'introspection de machines virtuelles hétérogènes par la surveillance de la couche hyperviseur pour lutter contre des attaques de logiciels malveillants pour la protection de machines virtuelles hétérogènes.

Le document US2015096028 propose une méthode de détection des logiciels malveillants dans le système d'exploitation d'un ordinateur. La méthode consiste à établir un point d'interruption lorsqu'une application utilisateur demande le contrôle via une adresse dans le noyau du système d'exploitation. La structure de données du système d'exploitation est vérifiée et les adresses des commandes à exécuter pendant l'appel système sont vérifiées. Les logiciels malveillants sont détectés si l'adresse d'une commande n'appartient pas à une plage déterminée.

### Objet et résumé de l'invention

L'invention vise par conséquent une autre solution pour identifier automatiquement la zone occupée par du code informatique dans une mémoire.

Plus précisément, l'invention concerne un procédé de détection d'une zone approximative occupée par le code informatique d'un noyau d'un système d'exploitation dans une mémoire, cette zone comportant une ou plusieurs plages dans cette mémoire. Ce procédé comporte :
- un procédé itératif comportant :
   - une première itération comportant :
      - une étape de détection d'au moins une adresse cible dans la mémoire ;
      - une étape de détermination d'une zone délimitée par une première adresse cible et par une deuxième adresse cible ; et
   - au moins une deuxième itération comportant :
      - une étape de désassemblage d'au moins une partie de la zone déterminée au cours de l'itération précédente ;
      - une étape de détection d'au moins une adresse cible pointée par une instruction de code informatique comprise dans ladite au moins une partie de zone désassemblée ; et
      - une étape de détermination d'une zone délimitée par une première de ces adresses cibles et par une deuxième de ces adresses cibles détectées au cours de cette deuxième itération ;
   - une condition d'arrêt étant vérifiée lorsqu'aucune nouvelle adresse cible n'est détectée au cours de la dernière itération ; et
- une étape de recherche d'une plage de mémoire complémentaire démarrant juste après la deuxième adresse cible obtenue à la dernière itération et ne comportant que du code informatique ;
- ladite zone approximative occupée par le code informatique dans le noyau du système d'exploitation étant délimitée par la première adresse cible obtenue à la dernière itération et par l'adresse la plus grande de ladite plage de mémoire complémentaire.

Corrélativement, l'invention vise un dispositif de détection d'une zone approximative occupée par le code informatique d'un noyau d'un système d'exploitation dans une mémoire, cette zone comportant une ou plusieurs plages dans ladite mémoire, ce dispositif comportant un module apte à mettre en œuvre un procédé de détection tel que mentionné ci-dessus.

La zone occupée par le code informatique ne pouvant être déterminée avec certitude, elle est qualifiée de zone approximative. Dans la plupart des cas, cette zone est déterminée à plus de 99%.

Ainsi, et d'une façon générale, l'invention propose de détecter par itérations successives des adresses cibles dans la mémoire, de délimiter des zones pointées par ces adresses cibles jusqu'à une condition d'arrêt et de compléter la zone ainsi identifiée par une zone de code démarrant juste après la dernière adresse cible identifiée.

On rappelle qu'une adresse cible est l'adresse d'une instruction pointée par une autre instruction, par exemple d'appel (instruction de type CALL adresse cible), ou de saut (instruction de type JMP adresse cible),

Le procédé est particulièrement avantageux en ce :
- qu'il permet de détecter une zone de code comportant des plages non contiguës ;
- qu'il est efficace car il progresse rapidement dans sa phase itérative en traitant exclusivement les adresses cibles ;
- qu'il est précis par la mise en oeuvre de l'étape de recherche complémentaire qui permet de détecter précisément la fin de la zone de code.

Les adresses cibles utilisées dans la première itération peuvent être détectées par tout moyen par exemple en désassemblant aléatoirement des portions de code binaire pour y rechercher une instruction de type CALL ou JMP.

Dans un mode particulier de réalisation du procédé de détection selon l'invention, les adresses cibles détectées au cours de la première itération sont obtenues dans une table de vecteurs d'interruptions ou dans une table d'un gestionnaire d'appels systèmes d'une zone de données de la mémoire.

Cette caractéristique est très avantageuse car elle permet de trouver très rapidement un grand nombre d'adresses cibles.

Dans un mode particulier, le procédé de détection selon l'invention comporte, pour au moins une itération :
- une étape de regroupement des adresses cibles détectées au cours de cette itération et des itérations précédentes en un ou plusieurs groupes, un groupe d'adresses cibles comportant une seule adresse cible ou plusieurs adresses cibles séparées deux à deux par une distance inférieure à une distance déterminée, ces groupes étant ordonnés ; et
- une étape d'identification des groupes comportant au moins un nombre déterminé d'adresses cibles ;
- ladite zone déterminée au cours de cette itération étant une plage délimitée par la plus petite adresse cible et par la plus grande adresse cible de ces groupes.

Cette étape de regroupement est connue en anglais sous le nom de « clustering ». Elle vise à identifier des plages de code binaire avec une forte densité d'adresses cibles, qui, statistiquement comportent une forte proportion de code informatique et très peu de données. Seules ces plages sont désassemblées ce qui accélère fortement le processus.

Dans un mode particulier, le procédé de détection selon l'invention comporte :
- une étape d'identification, dans la zone approximative ; d'au moins une plage de code binaire qui correspond à des données ; et
- une étape d'exclusion de cette ou de ces plages de code binaire de la zone approximative.

Cette étape vise à éliminer des zones de données qui auraient été identifiées à tort comme des zones de code. Il est important de noter que cette étape est mise en oeuvre après le procédé itératif de sorte qu'elle peut n'être exécutée qu'une seule fois.

Dans un mode particulier de réalisation de l'invention, une plage de code binaire correspondant à des données est identifiée lorsqu'elle comporte, avec au moins une densité déterminée, des portions de code binaire représentant :
- une instruction de type NOP ; ou
- une instruction de type INT3 ; ou
- une instruction invalide ; ou
- une instruction de saut conditionnel non précédée d'une instruction de test ou d'une instruction arithmétique, ou
- une instruction comprenant des opérandes de taille incompatible.

Dans un mode particulier, le procédé de détection selon l'invention comporte :
- une étape consistant à vérifier si du code binaire exclu de ladite zone approximative correspond à une adresse cible pointée par une instruction ; et le cas échéant ;
- une étape de réintégration de cette adresse cible dans la zone approximative.

Cette étape vise à réintégrer dans la zone approximative des instructions qui auraient été éliminées à tort car comprises dans des plages à forte densité de données.

Dans un mode particulier, le procédé de détection selon l'invention comporte :
- une étape de recherche dans la zone approximative de constantes de la taille d'un pointeur et lorsque desdites constantes sont identifiées, une étape de recherche :
- d'une dite première constante correspondant à la plus petite adresse du premier groupe d'adresses ou à l'adresse précédant le premier groupe d'adresses ; et
- d'une dite deuxième constante correspondant à ou suivant l'adresse la plus grande de la zone approximative ;
- une étape de délimitation de la zone approximative par la première constante et la deuxième constante sauf s'il existe du code binaire représentatif de données entre cette première constante et la plus petite adresse du premier groupe d'adresses ou entre l'adresse la plus grande de la zone approximative et la deuxième constante.

Cette caractéristique permet de délimiter très précisément la zone approximative dans sa partie basse et dans sa partie haute.

Dans un mode de réalisation du procédé selon l'invention, le noyau s'exécute dans la mémoire vive d'une machine virtuelle.

Corrélativement, dans un mode de réalisation, le dispositif de détection selon l'invention comporte une machine virtuelle et un hyperviseur, le module de ce dispositif étant mis en oeuvre par l'hyperviseur pour détecter la zone approximative occupée par le code informatique du noyau d'un système d'exploitation lorsqu'il s'exécute dans la mémoire vive de la machine virtuelle.

Dans un mode particulier de réalisation, les différentes étapes du procédé de détection sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1A représente l'architecture matérielle d'un dispositif conforme à un mode particulier de réalisation de l'invention ;
- la figure 1B représente une table de vecteurs d'interruption ;
- la figure 1C représente une table d'appels système ;
- la figure 2 illustre, sous forme d'organigramme, les principales étapes d'un procédé de détection d'une zone approximative occupée par le code informatique d'un noyau d'un système d'exploitation du dispositif de la figure 1A, ce procédé étant conforme à un mode particulier de réalisation de l'invention ;
- la figure 3A représente l'état de variables utilisées par le procédé de détection de la figure 2, après l'étape de détection d'adresses cibles de la première itération de ce procédé ;
- la figure 3B représente l'état de variables utilisées par le procédé de détection de la figure 2, après une étape de regroupement de ces adresses cibles ;
- la figure 3C représente l'état de variables utilisées par le procédé de détection de la figure 2, après une étape de regroupement d'adresses cibles identifiées lors d'une deuxième itération de ce procédé ;
- la figure 3D représente l'état de variables utilisées par le procédé de détection de la figure 2, après délimitation d'une zone approximative occupée par du code informatique du noyau ;
- la figure 3E représente l'état de variables utilisées par le procédé de détection de la figure 2 après identification et exclusion de plages de données dans cette zone approximative ;
- la figure 3F représente l'état de variables utilisées par le procédé de détection de la figure 2 après exclusion de plages de données dans la zone approximative et réintégration d'instructions exclues à tort ; et
- la figure 3G représente l'état de variables utilisées par le procédé de détection de la figure 2 après délimitation de la zone approximative.

### Description détaillée de l'invention

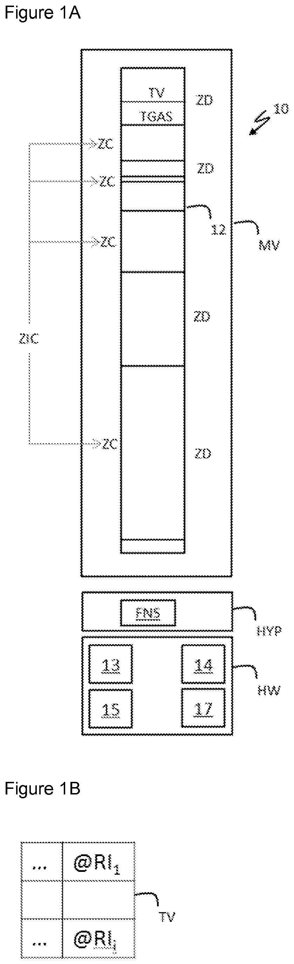

La figure 1A représente l'architecture matérielle d'un dispositif 10 conforme à un mode particulier de réalisation de l'invention.

Ce dispositif 10 comporte une couche matérielle HW, un hyperviseur HYP et une machine virtuelle MV.

L'hyperviseur HYP gère les ressources matérielles du dispositif 10, notamment un processeur 13, une mémoire vive 14, un disque dur 15 et des moyens de communication 17.

Le disque dur 15 constitue en outre un support d'enregistrement conforme à l'invention, lisible par le processeur 13 et sur lequel est enregistré ici un programme d'ordinateur conforme à l'invention.

Le programme d'ordinateur définit un module fonctionnel (et logiciel ici), configuré pour mettre en oeuvre les étapes du procédé de détection selon l'invention qui seront décrites ultérieurement.

La mémoire vive (constituée physiquement par le composant 14) de cette machine virtuelle MV comporte de façon classique un espace utilisateur et un espace noyau. L'espace noyau comporte un noyau d'un système d'exploitation à proprement parler, des modules et des pilotes (en anglais « drivers »).

Sur la figure 1A, seul le noyau 12 (parfois appelé noyau principal) est représenté. Il comporte des zones de code informatique ZC et des zones de données ZD.

L'invention vise une méthode pour déterminer la zone ZIC occupée par le code informatique, à savoir l'union des zones de code ZC.

Dans l'exemple de réalisation décrit ici, cette méthode est mise en oeuvre à l'aide de fonctions FNS de l'hyperviseur HYP, par exemple, par une fonction de lecture de la mémoire virtuelle de la VM, et par une fonction de lecture des registres du processeur 13.

De façon connue, une des zones de données du noyau dans la mémoire vive comporte une table TV de vecteurs d'interruptions. Une telle table TV représentée à la figure 1B comporte un ensemble de lignes, chaque ligne comportant en particulier l'adresse @RIᵢ d'une routine de gestion d'une interruption INTi. Une routine de gestion d'interruption est déclenchée en réaction à une interruption, telle qu'une exception comme une division par 0, etc.

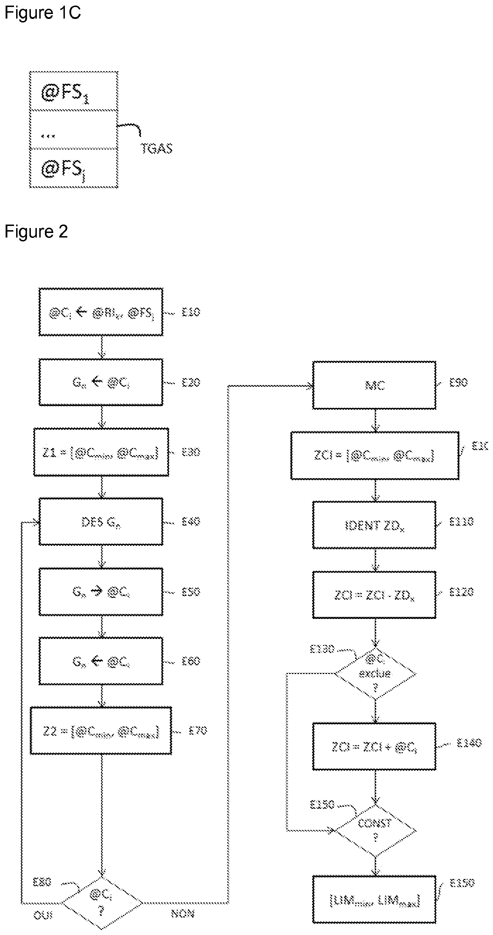

Par ailleurs, une zone de code comporte un gestionnaire d'appels système. Ce gestionnaire d'appels système utilise une zone de données ZD qui contient une table TGAS représentée à la figure 1C, chaque ligne de cette table comportant l'adresse @FSj d'une fonction système FSj fournie par le système d'exploitation de la machine virtuelle.

On rappelle qu'une fonction système ou « appel système » permet de communiquer directement avec le noyau du système d'exploitation de la machine virtuelle MV. Par exemple, pour écrire sur le disque dur 15, un programme de l'espace utilisateur doit passer par des appels à des fonctions système qui contrôlent les écritures sur le disque commandées depuis le programme. Les fonctions système garantissent la sécurité des données et leur intégrité sur le disque en contrôlant les applications de l'espace utilisateur.

La figure 2 représente sous forme d'organigramme les principales étapes d'un procédé conforme à l'invention, mises en oeuvre par l'hyperviseur HYP, pour détecter une zone approximative ZIC occupée par le code informatique du noyau du système d'exploitation dans la mémoire vive de la machine virtuelle,

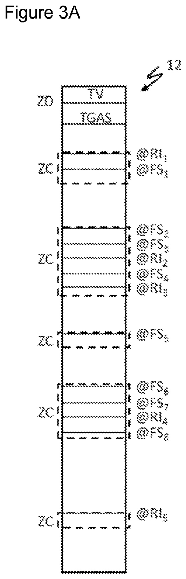

Au cours d'une étape E10, l'hyperviseur lit la table TV de vecteurs d'interruption et identifie la table des appels systèmes TGAS pour identifier les adresses @RIₖ dans la mémoire vive des routines d'interruption et les adresses @FSⱼ dans la mémoire vive des fonctions systèmes. Ces adresses constituent des adresses cibles @Cᵢ au sens de l'invention. Ces adresses sont représentées à la figure 3A. Elles marquent le début soit d'une routine d'interruption RIᵢ soit d'une fonction système FSⱼ, chacune dans une zone de code Ze.

Au cours d'une étape E20, l'hyperviseur regroupe les adresses cibles @Cᵢ obtenues au cours de l'étape E10.

Un groupe d'adresses cibles Gₙ comporte soit une adresse cible soit plusieurs adresses cibles séparées deux à deux par une distance inférieure à une distance déterminée (par exemple 1 Mb). Au cours de cette même étape E20, l'hyperviseur HYP identifie les groupes Gₙ comportant au moins un nombre déterminé d'adresses cibles (par exemple 10) ; les autres groupes ne sont pas retenus.

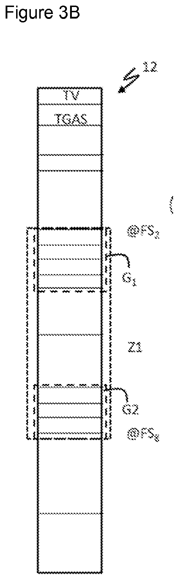

Dans l'exemple de la figure 3B, deux groupes G₁, G₂ sont ainsi identifiés.

Au cours d'une étape E30, l'hyperviseur détermine une plage Z1 délimitée, dans cet exemple, par la plus petite adresse @Cₘᵢₙ et par la plus grande adresse @Cₘₐₓ de l'ensemble des groupes Gₙ. En l'espèce @Cₘᵢₙ est l'adresse de début de la fonction système FS₂ et @Cmax est l'adresse de début de la fonction système FS₈.

Dans l'exemple de la figure 3B, la plage Z1 comporte une adresse cible @FS5 qui n'appartient ni au groupe G₁ ni au groupe G₂,
Puis l'hyperviseur HYP exécute au moins une deuxième itération.

Cette deuxième itération comporte une étape E40 de désassemblage des groupes Gₖ identifiés au cours de l'itération précédente. Pour mémoire, un désassemblage d'adresses ou de groupes d'adresses est mis en oeuvre au moyen d'un désassembleur. Un désassembleur est un programme qui traduit du langage machine, donc un fichier exécutable, en langage assembleur, ou langage « bas-niveau », qui représente le langage machine sous une forme compréhensible pour un humain. A cette fin des librairies de désassemblage sont utilisées, par exemple la librairie appelée Udis86 qui s'exécute dans l'espace noyau. Lors d'un désassemblage, il est possible de savoir combien d'octets sont à prendre en compte pour désassembler correctement une instruction. Cette information est en effet, indiquée dans le premier octet de l'instruction. Ainsi, si l'on commence le désassemblage à partir d'un premier octet d'une instruction, on sait combien d'octets sont à prendre en compte pour désassembler l'instruction.

Au cours d'une étape E50, l'hyperviseur HYP identifie et enregistre les adresses cibles @Cᵢ pointées par des instructions de code informatique comprises dans les groupes Gₖ désassemblés.

Au cours d'une étape E60, l'hyperviseur HYP regroupe les adresses cibles @Cᵢ obtenues au cours de l'étape E50, et des itérations précédentes (étape E10 de la première itération, et étape E50 des occurrences précédentes de la deuxième itération si elles existent).

Comme pour l'étape E10 de la première itération, un groupe d'adresses cibles comporte soit une seule adresse cible soit plusieurs adresses cibles séparées deux à deux par une distance inférieure à une distance déterminée. Au cours de cette même étape E60, l'hyperviseur identifie les groupes Gᵢ comportant au moins un nombre déterminé d'adresses cibles.

La distance déterminée d'une part et le nombre déterminé d'autre part peuvent être identiques ou différents de ceux utilisés au cours de l'étape E20 de la première itération.

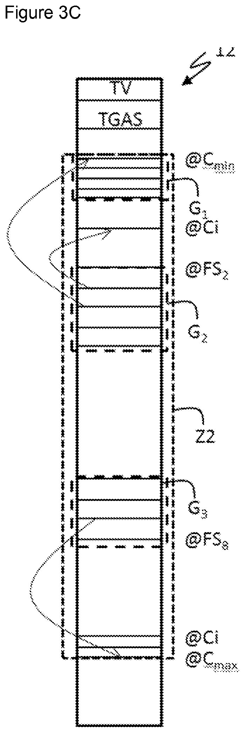

Dans l'exemple de la figure 3C, un nouveau groupe G₁ est identifié en plus d'un premier groupe G₂ et d'un deuxième groupe G₃ identifiés à la première itération et appelés respectivement G1 et G2 lors de la précédente itération, illustrée par la figure 3B. A noter que les groupes sont ordonnés en ce que toutes les adresses du groupe Gᵢ sont inférieures aux adresses du groupe Gᵢ₊₁. Dans un autre exemple, il se peut que de nouvelles adresses cibles @Ci viennent grossir les groupes identifiés au cours d'une itération précédente,

Au cours d'une étape E70, l'hyperviseur détermine une zone Z2 constituée, dans cet exemple, par une plage mémoire délimitée par la plus petite adresse cible @Cₘᵢₙ et par la plus grande adresse cible @Cₘₐₓ de ces groupes G₁ à G₃.

Au cours d'une étape E80 l'hyperviseur vérifie si aucune nouvelle adresse cible n'est identifiée. Si c'est le cas, le procédé itératif s'arrête. Sinon l'étape E80 est suivie par une deuxième occurrence de l'étape E40 de désassemblage appliquée aux groupes identifiés à l'étape E60 et une nouvelle itération s'exécute (étapes E40 à E80).

Lorsque la condition d'arrêt du procédé itératif est vérifiée, l'étape E80 est suivie par une étape E90 de recherche d'une plage de mémoire complémentaire MC commençant juste après l'adresse cible la plus grande @Cₘₐₓ obtenue à l'étape E70 de la dernière itération et ne comportant que du code informatique.

En effet, à l'adresse cible @Cₘₐₓ, se trouve normalement, par construction, une instruction de code informatique.

L'étape E90 consiste donc à identifier la fin de la fonction informatique qui comporte cette instruction. Elle peut être effectuée en recherchant la première instruction de fin de fonction (instruction RET ou JUMP conditionnel) qui n'est pas suivie par une adresse cible d'une instruction de redirection de cette même fonction.

Cette mémoire complémentaire MC est donc la plage de mémoire [@MCₘᵢₙ, @MCₘₐₓ] dans laquelle :
- @MCₘᵢₙ suit l'adresse @Cₘₐₓ obtenue à l'étape E70 de la dernière itération et ;
- @MCₘₐₓ est l'adresse de cette instruction RET ou JUMP conditionnel.

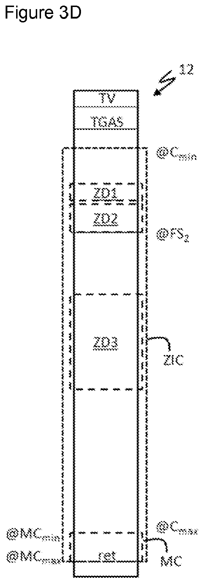

Au cours d'une étape E100, l'hyperviseur détermine que la zone approximative ZIC occupée par le code informatique du noyau de la machine virtuelle est la plage délimitée par les adresses @Cₘᵢₙ et @MCₘₐₓ (figure 3D).

Dans le mode de réalisation décrit ici, le procédé de détection selon l'invention comporte une étape E110 pour identifier dans la zone ZIC déterminée à l'étape E100, d'éventuelles plages de code binaire ZD correspondant à des données et une étape E120 pour exclure, si elles existent, ces plages de code binaire de la zone approximative ZIC.

En effet la zone approximative ZIC déterminée à l'étape E100 peut comporter des zones de données ZDx. Dans le cas de la figure 3D, elle comporte trois zones de données ZD1, ZD2 et ZD3.

Dans le mode de réalisation décrit ici, une plage de code binaire est identifiée comme une zone de données ZD lorsqu'elle comporte, avec au moins une densité déterminée, du code binaire représentant :
- une instruction de type NOP ; ou
- une instruction de type INT3 ; ou
- une instruction invalide ; ou
- une instruction de saut conditionnel non précédée d'une instruction de test ou d'une instruction arithmétique, ou
- une instruction comprenant des opérandes de tailles incompatibles.

Ces instructions sont représentatives d'une zone de données.

Par exemple, on enregistre les adresses de ces instructions, on regroupe ces adresses comme fait lors de l'étape E60 en utilisant une distance et un nombre prédéterminés, et chaque groupe identifié est considéré comme une plage de données.

A titre d'exemple, l'annexe A illustre une plage [0x82834fcd, 0x8283500f] de code binaire comportant des instructions NOP, INVALID, INT3, add [eax], al dont les opérandes [eax] et al sont incompatibles car de tailles différentes, respectivement 32 bits et 8 bits.

Si l'adresse la plus grande @MCₘₐₓ fait partie des zones de code binaire exclues alors l'adresse cible la plus grande @Cₘₐₓ est affectée à l'adresse la plus grande @MCₘₐₓ.

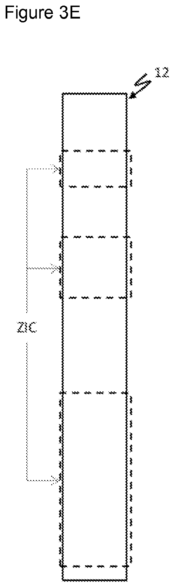

La figure 3E représente la zone approximative ZIC, en trois plages, une fois débarrassée de deux plages de données, et plus précisément :
- d'une première plage comportant la plage ZD1, la plage ZD2 et le code binaire compris entre ces deux plages ; et
- de la plage binaire ZD3.

Dans cet exemple le code binaire entre les plages ZD1 et ZD2 est une zone de code ZC exclue à tort car il contient une instruction correspondant à une adresse cible pointée par une instruction de type CALL (voir figure 3C, adresse cible @Cᵢ pointée depuis une instruction du groupe G2).

Par conséquent, dans ce mode de réalisation, le procédé de détection selon l'invention comporte :
- une étape E130 consistant à vérifier si du code binaire exclu (à l'étape E120) de la zone ZIC correspond à une adresse cible pointée par une instruction de type CALL correspondant à un début de fonction ; et le cas échéant ;
- une étape E140 de réintégration de la fonction pointée par cette adresse cible dans la zone ZIC.

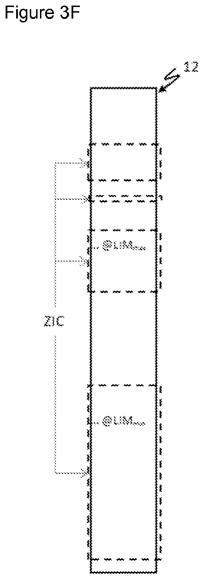

La figure 3F représente la zone de code ZIC, en quatre plages, une fois la zone de code exclue à tort à l'étape E120 réintégrée à l'étape E130.

Dans l'exemple de réalisation décrit ici, le procédé de détection selon l'invention comporte une étape pour tenter de délimiter précisément la zone de code ZIC.

Pour cela le procédé de détection propose de rechercher dans la zone approximative ZIC des constantes qui pourraient constituer ces adresses limites,

Plus précisément, dans ce mode de réalisation, le procédé de détection selon l'invention comporte une étape E150 de recherche dans ladite zone occupée par du code informatique ZIC de constantes de la taille d'un pointeur (qui correspond à la taille d'une adresse).

Lorsque ces constantes sont identifiées, le procédé recherche les constantes @LIMₘᵢₙ et @LIMₘₐₓ correspondant respectivement à
- la plus petite adresse du premier groupe d'adresses G₁ ou à l'adresse précédant le premier groupe d'adresses G₁ ; et à :
- l'adresse la plus grande @MCₘₐₓ ou à l'adresse suivant @MCₘₐₓ.

Ces deux constantes @LIMₘᵢₙ, et @LIMₘₐₓ correspondent éventuellement à l'adresse de début et l'adresse de fin du noyau.

S'il n'existe pas de code binaire représentatif de données entre @LIMₘᵢₙ et la plus petite adresse du premier groupe G₁. ni entre la dernière adresse de la zone approximative et @LIMₘₐₓ, le procédé délimite (étape E160) la zone ZIC par l'adresse @LIMₘᵢₙ et l'adresse @LIMₘₐₓ. Sinon le procédé délimite la zone ZIC par la plus petite adresse du premier groupe G₁ et l'adresse la plus grande @MCₘₐₓ de la zone complémentaire obtenue à l'étape E70.

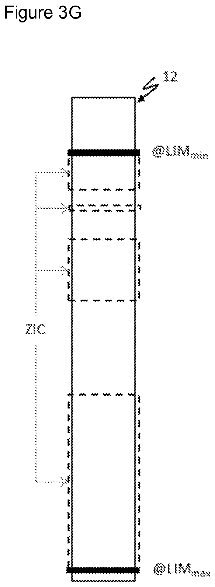

La figure 3G représente la zone de code ZIC délimitée par ces deux constantes identifiées dans la zone de code ZIC représentée à la figure 3F.

Le procédé est décrit ici pour un noyau d'un système d'exploitation dans une mémoire vive. Il peut s'appliquer également pour identifier du code d'un noyau d'un système d'exploitation dans une capture mémoire (« dump mémoire » en anglais).

Le procédé a été décrit dans le cadre d'un noyau Linux pour lequel on peut facilement identifier la table d'interruptions et la table d'appels système. Pour d'autres systèmes d'exploitation, on utilise la table d'interruptions et éventuellement l'adresse du gestionnaire d'appels système et toute adresse atteignable depuis ce dernier.

### ANNEXE A

0x82834fcd add [eax], al
0x82834fcf add [eax], al
0x82834fd1 add [eax], al
0x82834fd2 nop
0x82834fd3 nop
0x82834fd5 add [eax], al
0x82.834fd7 add [eax], al
0x82834fd9 add [eax], al
0x82834fda int3
0x82834fdb int3
0x82834fdc int3
0x82834fdd int3
0x82834fde int3
0x82834fdf int3
0x82834fe1 jnz 0xef
0x82834fe3 add [eax], al
0x82834fe5 add [eax], al
0x82834fe7 add [eax], al
0x82834fe9 add [eax], al
0x82834feb add [eax], al
0x82834fed add [eax], al
0x82834fef add [eax], al
0x82834ff1 add [eax], al
0x82834ff3 invalid
0x82834ff5 invalid
0x82834ff7 add [eax], al
0x82834ff9 add [eax], al
0x82834ffa nop
0x82834ffb nop
0x82834ffd invalid
Ox82834fff invalid
0x82835001 adc [eax], al
0x82835003 add [ecx+eax], cl
0x82835007 add [esp+esi], al
0x8283500a or [esp+ecx], dh
0x8283500d xor al, 0x10
0x8283500f xor al, 0x14

## Revendications

1. Procédé de détection d'une zone approximative (ZIC) occupée par le code informatique d'un noyau (12) d'un système d'exploitation dans une mémoire, ladite zone (ZIC) comportant une ou plusieurs plages (ZC) dans ladite mémoire, ce procédé comportant :
- un procédé itératif comportant :
- une première itération comportant :
- une étape (E10) de détection d'au moins une adresse cible (@RIₖ, @FSⱼ) dans ladite mémoire ;
le procédé étant **caractérisé en ce que** ladite première itération comporte :
- une étape (E30) de détermination d'une zone (Z1) délimitée par une première dite adresse cible (@Cₘᵢₙ) et par une deuxième dite adresse cible (@Cₘₐₓ) ; et
- au moins une deuxième itération comportant :
- une étape (E40) de désassemblage d'au moins une partie de la zone (Z1, Z2) déterminée (E30, E70) au cours de l'itération précédente ;
- une étape (E50) de détection d'au moins adresse cible (@Cᵢ) pointée par une instruction de code informatique comprise dans ladite au moins une partie de zone désassemblée (Z1, Z2) ; et
- une étape (E70) de détermination d'une zone (Z2) délimitée par une première dite adresse cible (@Cₘᵢₙ) et par une deuxième dite adresse cible (@Cₘₐₓ) détectées au cours de cette deuxième itération ;
ledit procédé étant en outre **caractérisé en ce qu'**une condition d'arrêt est vérifiée (E80) lorsqu'aucune nouvelle adresse cible n'est détectée (E50) au cours de la dernière itération ; et **en ce qu'**il comporte :
- une étape (E90) de recherche d'une plage de mémoire complémentaire (MC) démarrant juste après la deuxième adresse cible (@Cmax) obtenue à la dernière itération et ne comportant que du code informatique ;
- ladite zone approximative (ZIC) occupée par le code informatique dans le noyau du système d'exploitation étant délimitée (E100) par la première adresse cible (@Cₘᵢₙ) obtenue à la dernière itération et par l'adresse la plus grande (@MCₘₐₓ) de ladite plage de mémoire complémentaire (MC).

2. Procédé de détection d'une zone approximative selon la revendication 1 **caractérisé en ce que** ladite au moins une adresse cible (@RIₖ, @FSⱼ) détectée (E10) au cours de ladite première itération est obtenue (E10) dans une table (TV) de vecteurs d'interruptions ou dans une table (TGAS) d'un gestionnaire d'appels systèmes d'une zone de données de ladite mémoire.

3. Procédé de détection d'une zone approximative selon la revendication 1 ou 2 **caractérisé en ce qu'**il comporte, pour au moins une dite itération :
- une étape (E20, E60) de regroupement des dites adresses cibles (@Cᵢ) détectées (E10, E50) au cours de ladite itération et des itérations précédentes en au moins un groupe (Gₙ), un dit groupe d'adresses cibles comportant une seule adresse cible ou plusieurs adresses cibles séparées deux à deux par une distance inférieure à une distance déterminée, les dits groupes étant ordonnés ; et
- une étape (E20, E60) d'identification desdits groupes (Gₙ) comportant au moins un nombre déterminé d'adresses cibles ;
- ladite zone (Z1, Z2) déterminée (E30, E70) au cours de ladite itération étant une plage délimitée par la plus petite adresse cible (@CIₘᵢₙ) et par la plus grande adresse cible (@CIₘₐₓ) desdits groupes.

4. Procédé de détection d'une zone approximative selon l'une quelconque des revendications 1 à 3 **caractérisé en ce qu'**il comporte :
- une étape (E110) d'identification, dans ladite zone approximative (ZIC) d'au moins une plage de code binaire (ZDₓ) qui correspond à des données ; et
- une étape (E120) d'exclusion de ladite au moins une plage de code binaire (ZDₓ) de ladite zone approximative (ZIC).

5. Procédé de détection d'une zone approximative selon la revendication 4 **caractérisé en ce que** ladite au moins une plage de code binaire (ZDx) correspondant à des données est identifiée (E110) lorsqu'elle comporte, avec au moins une densité déterminée, des portions de code binaire représentant :
- une instruction de type NOP ; ou
- une instruction de type INT3 ; ou
- une instruction invalide ; ou
- une instruction de saut conditionnel non précédée d'une instruction de test ou d'une instruction arithmétique, ou
- une instruction comprenant des opérandes de taille incompatible.

6. Procédé de détection d'une zone occupée par du code informatique selon l'une quelconque des revendications 4 à 5, **caractérisé en ce qu'**il comporte :
- une étape (E130) consistant à vérifier si du code binaire exclu (E120) de ladite zone approximative (ZIC) correspond à une adresse cible pointée par une instruction de type CALL ; et le cas échéant ;
- une étape (E140) de réintégration de la fonction pointée par ladite adresse cible dans ladite zone.

7. Procédé de détection d'une zone occupée par du code informatique selon l'une quelconque des revendications 3 à 6, **caractérisé en ce qu'**il comporte :
- une étape (E150) de recherche dans ladite zone approximative (ZIC) de constantes de la taille d'un pointeur et lorsque desdites constantes sont identifiées, une étape de recherche :
- d'une dite première constante (@LIMₘᵢₙ) correspondant à la plus petite adresse du premier groupe d'adresses (G₁) ou à l'adresse précédant le premier groupe d'adresses (G₁) ; et
- d'une dite deuxième constante (@LIMₘₐₓ) correspondant à ou suivant l'adresse la plus grande (@MCₘₐₓ) de la zone approximative (ZIC) ;
- une étape (E160) de délimitation de ladite zone approximative (ZIC) par ladite première constante (@LIMₘᵢₙ) et ladite deuxième constante (@LIMₘₐₓ) sauf s'il existe du code binaire représentatif de données entre cette première constante (@LIMₘᵢₙ) et la plus petite adresse dudit premier groupe d'adresses (G₁) ou entre l'adresse la plus grande (@MCₘₐₓ) de la zone approximative (ZIC) et la dite deuxième constante (@LIMₘₐₓ).

8. Procédé selon l'une quelconque des revendications 1 à 7 dans lequel ledit noyau s'exécute dans la mémoire vive d'une machine virtuelle (MV).

9. Dispositif (10) de détection d'une zone approximative (ZIC) occupée par le code informatique d'un noyau d'un système d'exploitation dans une mémoire , ladite zone (ZIC) comportant une ou plusieurs plages (ZC) dans ladite mémoire, ce dispositif comportant un module apte à mettre en oeuvre un procédé de détection selon l'une quelconque des revendications 1 à 8.

10. Dispositif selon la revendication 9 comportant une machine virtuelle (MV) et un hyperviseur (HYP) **caractérisé en ce que** ledit module est mis en oeuvre par ledit hyperviseur (HYP) pour mettre en oeuvre un procédé de détection selon la revendication 8, pour détecter la zone approximative (ZIC) occupée par le code informatique du noyau d'un système d'exploitation lorsqu'il s'exécute dans la mémoire vive de ladite machine virtuelle.

11. Programme d'ordinateur comportant des instructions pour l'exécution des étapes du procédé de détection selon l'une quelconque des revendications 1 à 8 lorsque ledit programme est exécuté par un ordinateur.

12. Support d'enregistrement (15) lisible par un ordinateur sur lequel est enregistré un programme d'ordinateur comprenant des instructions pour l'exécution des étapes du procédé de détection selon l'une quelconque des revendications 1 à 8.

## Patentansprüche

1. Verfahren zur Erkennung einer ungefähren Zone (ZIC), die durch den Rechnercode eines Kerns (12) eines Betriebssystems in einem Speicher belegt wird, wobei die Zone (ZIC) einen oder mehrere Bereiche (ZC) in dem Speicher umfasst, wobei dieses Verfahren Folgendes umfasst:
- ein iteratives Verfahren, das Folgendes umfasst:
- eine erste Iteration, die Folgendes umfasst:
- einen Schritt (E10) des Erkennens mindestens einer Zieladresse (@RIₖ, @FSⱼ) in dem Speicher;
wobei das Verfahren **dadurch gekennzeichnet ist, dass** die erste Iteration Folgendes umfasst:
- einen Schritt (E30) des Bestimmens einer Zone (Z1), die durch eine erste solche Zieladresse (@Cₘᵢₙ) und durch eine zweite solche Zieladresse (@Cₘₐₓ) begrenzt wird; und
- mindestens eine zweite Iteration, die Folgendes umfasst:
- einen Schritt (E40) des Disassemblierens mindestens eines Teils der Zone (Z1, Z2), die während der vorhergehenden Iteration bestimmt (E30, E70) wurde;
- einen Schritt (E50) des Erkennens mindestens einer Zieladresse (@Cᵢ), auf die durch einen Rechnercodebefehl gezeigt wird und die in dem mindestens einen disassemblierten Zonenteil (Z1, Z2) enthalten ist; und
- einen Schritt (E70) des Bestimmens einer Zone (Z2), die durch eine erste solche Zieladresse (@Cₘᵢₙ) und durch eine zweite solche Zieladresse (@Cₘₐₓ), die während dieser zweiten Iteration erkannt wurden, begrenzt wird;
wobei das Verfahren ferner **dadurch gekennzeichnet ist, dass** eine Stoppbedingung überprüft (E80) wird, wenn während der letzten Iteration keine neue Zieladresse erkannt (E50) wird; und dass es Folgendes umfasst:
- einen Schritt (E90) des Suchens eines komplementären Speicherbereichs (MC), der direkt hinter der zweiten Zieladresse (@Cₘₐₓ), die bei der letzten Iteration erhalten wurde, beginnt und nur Rechnercode umfasst;
- wobei die ungefähre Zone (ZIC), die durch den Rechnercode in dem Kern des Betriebssystems belegt wird, durch die erste Zieladresse (@Cₘᵢₙ), die bei der letzten Iteration erhalten wurde, und durch die größte Adresse (@MCₘₐₓ) des komplementären Speicherbereichs (MC) begrenzt (E100) wird.

2. Verfahren zur Erkennung einer ungefähren Zone nach Anspruch 1, **dadurch gekennzeichnet, dass** die mindestens eine Zieladresse (@RIₖ, @FSⱼ), die während der ersten Iteration erkannt (E10) wurde, in einer Tabelle (TV) mit Interruptvektoren oder in einer Tabelle (TGAS) einer Verwaltungseinheit für Systemaufrufe einer Datenzone des Speichers erhalten (E10) wird.

3. Verfahren zur Erkennung einer ungefähren Zone nach Anspruch 1 oder 2, **dadurch gekennzeichnet, dass** es für mindestens eine solche Iteration Folgendes umfasst:
- einen Schritt (E20, E60) des Gruppierens der Zieladressen (@Cᵢ), die während der Iteration und der vorhergehenden Iterationen erkannt (E10, E50) wurden, in mindestens einer Gruppe (Gₙ), wobei eine solche Gruppe von Zieladressen eine einzige Zieladresse oder mehrere Zieladressen, die jeweils paarweise durch einen Abstand, der kleiner als ein bestimmter Abstand ist, getrennt sind, umfasst, wobei die Gruppen geordnet sind; und
- einen Schritt (E20, E60) des Identifizierens der Gruppen (Gₙ), die mindestens eine bestimmte Anzahl von Zieladressen umfassen;
- wobei die während der Iteration bestimmte (E30, E70) Zone (Z1, Z2) ein Bereich ist, der durch die kleinste Zieladresse (@CIₘᵢₙ) und durch die größte Zieladresse (@CIₘₐₓ) der Gruppen begrenzt wird.

4. Verfahren zur Erkennung einer ungefähren Zone nach einem beliebigen der Ansprüche 1 bis 3, **dadurch gekennzeichnet, dass** es Folgendes umfasst:
- einen Schritt (E110) des Identifizierens, in der ungefähren Zone (ZIC), mindestens eines Binärcodebereichs (ZDₓ), der Daten entspricht; und
- einen Schritt (E120) des Ausschließens des mindestens einen Binärcodebereichs (ZDₓ) aus der ungefähren Zone (ZIC).

5. Verfahren zur Erkennung einer ungefähren Zone nach Anspruch 4, **dadurch gekennzeichnet, dass** der mindestens eine Binärcodebereich (ZDₓ), der Daten entspricht, identifiziert (E110) wird, wenn er mit mindestens einer bestimmten Dichte Binärcodeabschnitte umfasst, die Folgendes darstellen:
- einen Befehl vom Typ NOP; oder
- einen Befehl vom Typ INT3; oder
- einen ungültigen Befehl; oder
- einen bedingten Sprungbefehl, dem kein Testbefehl oder arithmetischer Befehl vorausgeht, oder
- einen Befehl, der Operanden mit nicht kompatibler Größe beinhaltet.

6. Verfahren zur Erkennung einer durch Rechnercode belegten Zone nach einem beliebigen der Ansprüche 4 bis 5, **dadurch gekennzeichnet, dass** es Folgendes umfasst:
- einen Schritt (E130), der darin besteht zu überprüfen, ob aus der ungefähren Zone (ZIC) ausgeschlossener (E120) Binärcode einer Zieladresse entspricht, auf die durch einen Befehl vom Typ CALL gezeigt wird; und wenn ja;
- einen Schritt (E140) des Reintegrierens der Funktion, auf die durch die Zieladresse gezeigt wird, in die Zone.

7. Verfahren zur Erkennung einer durch Rechnercode belegten Zone nach einem beliebigen der Ansprüche 3 bis 6, **dadurch gekennzeichnet, dass** es Folgendes beinhaltet:
- einen Schritt (E150) des Suchens, in der ungefähren Zone (ZIC), von Konstanten mit der Größe eines Zeigers und, wenn solche Konstanten identifiziert werden, einen Schritt des Suchens:
- einer solchen ersten Konstante (@LIMₘᵢₙ), die der kleinsten Adresse der ersten Gruppe von Adressen (G₁) oder der Adresse, die der ersten Gruppe von Adressen (G₁) vorausgeht, entspricht; und
- einer solchen zweiten Konstante (@LIMₘₐₓ), die der größten Adresse (@MCₘₐₓ) der ungefähren Zone (ZIC) entspricht oder auf diese folgt;
- einen Schritt (E160) des Begrenzens der ungefähren Zone (ZIC) durch die erste Konstante (@LIMₘᵢₙ) und die zweite Konstante (@LIMₘₐₓ), außer wenn zwischen dieser ersten Konstante (@LIMₘᵢₙ) und der kleinsten Adresse der ersten Gruppe von Adresse (G₁) oder zwischen der größten Adresse (@MCₘₐₓ) der ungefähren Zone (ZIC) und der zweiten Konstante (@LIMₘₐₓ) für Daten repräsentativer Binärcode vorhanden ist.

8. Verfahren nach einem beliebigen der Ansprüche 1 bis 7, wobei der Kern in dem Arbeitsspeicher einer virtuellen Maschine (MV) ausgeführt wird.

9. Vorrichtung (10) zur Erkennung einer ungefähren Zone (ZIC), die durch den Rechnercode eines Kerns eines Betriebssystems in einem Speicher belegt wird, wobei die Zone (ZIC) einen oder mehrere Bereiche (ZC) in dem Speicher umfasst, wobei diese Vorrichtung ein Modul umfasst, das dazu fähig ist, ein Verfahren zur Erkennung nach einem beliebigen der Ansprüche 1 bis 8 umzusetzen.

10. Vorrichtung nach Anspruch 9, die eine virtuelle Maschine (MV) und einen Hypervisor (HYP) umfasst, **dadurch gekennzeichnet, dass** das Modul durch den Hypervisor (HYP) umgesetzt wird, um ein Verfahren zur Erkennung nach Anspruch 8 umzusetzen, um die ungefähre Zone (ZIC) zu erkennen, die durch den Rechnercode des Kerns eines Betriebssystems belegt wird, wenn dieser in dem Arbeitsspeicher der virtuellen Maschine ausgeführt wird.

11. Computerprogramm, das Anweisungen umfasst, die bei der Ausführung des Programms durch einen Computer die Schritte des Verfahrens zur Erkennung nach einem beliebigen der Ansprüche 1 bis 8 ausführen.

12. Computerlesbares Speichermedium (15), auf dem ein Computerprogramm gespeichert ist, das Anweisungen zur Ausführung der Schritte des Verfahrens zur Erkennung nach einem beliebigen der Ansprüche 1 bis 8 beinhaltet.

## Claims

1. Method for detecting an approximate area (ZIC) occupied by the computer code of a core (12) of an operating system in a memory, said area (ZIC) comprising one or more ranges (ZC) in said memory, the method comprising:
- an iterative method comprising:
- a first iteration comprising:
- a step (E10) of detecting at least one target address (@RIₖ, @FSⱼ) in said memory;
the method being **characterized in that** said first iteration comprises:
- a step (E30) of determining an area (Z1) delimited by a first said target address (@Cₘᵢₙ) and by a second said target address (@Cₘₐₓ) ; and
- at least one second iteration comprising:
- a step (E40) of dismantling at least one part of the area (Z1, Z2) determined (E30, E70) during the previous iteration;
- a step (E50) of detecting at least one target address (@Cᵢ) pointed to by a computer code instruction included in said at least one part of the dismantled area (Z1, Z2); and
- a step (E70) of determining an area (Z2) delimited by a first said target address (@Cₘᵢₙ) and by a second said target address (@Cₘₐₓ) that have been detected during this second iteration;
said method being moreover **characterized in that** a stop condition is checked (E80) when no new target address is detected (E50) during the last iteration; and **in that** it comprises:
- a step (E90) of searching for a complementary memory range (MC) starting just after the second target address (@Cₘₐₓ) obtained in the last iteration and comprising only computer code;
- said approximate area (ZIC) occupied by the computer code in the core of the operating system being delimited (E100) by the first target address (@Cₘᵢₙ) obtained in the last iteration and by the largest address (@MCₘₐₓ) of said complementary memory range (MC) .

2. Method for detecting an approximate area according to Claim 1, **characterized in that** said at least one target address (@RIₖ, @FSⱼ) detected (E10) during said first iteration is obtained (E10) from a table (TV) of interruption vectors or from a table (TGAS) of a manager of system calls of a data area of said memory.

3. Method for detecting an approximate area according to Claim 1 or 2, **characterized in that** it comprises, for at least one said iteration:
- a step (E20, E60) of grouping said target addresses (@Cᵢ) detected (E10, E50) during said iteration and previous iterations into at least one group (Gₙ), one said group of target addresses comprising a single target address or multiple target addresses separated in twos by a distance less than a determined distance, said groups being ordered; and
- a step (E20, E60) of identifying said groups (Gₙ) comprising at least one determined number of target addresses;
- said area (Z1, Z2) determined (E30, E70) during said iteration being a range delimited by the smallest target address (@CIₘᵢₙ) and by the largest target address (@CIₘₐₓ) of said groups.

4. Method for detecting an approximate area according to any one of Claims 1 to 3, **characterized in that** it comprises:
- a step (E110) of identifying, in said approximate area (ZIC), at least one binary code range (ZDₓ) that corresponds to data; and
- a step (E120) of excluding said at least one binary code range (ZDₓ) from said approximate area (ZIC) .

5. Method for detecting an approximate area according to Claim 4, **characterized in that** said at least one binary code range (ZDₓ) corresponding to data is identified (E110) when it comprises, with at least one determined density, portions of binary code representing:
- an NOP-type instruction; or
- an INT3-type instruction; or
- an invalid instruction; or
- a conditional jump instruction not preceded by a test instruction or by an arithmetic instruction, or
- an instruction comprising operands of incompatible size.

6. Method for detecting an area occupied by computer code according to either one of Claims 4 and 5, **characterized in that** it comprises:
- a step (E130) involving checking whether binary code (E120) excluded from said approximate area (ZIC) corresponds to a target address pointed to by a CALL-type instruction; and, where applicable;
- a step (E140) of reintegrating the function pointed to by said target address into said area.

7. Method for detecting an area occupied by computer code according to either one of Claims 3 and 6, **characterized in that** it comprises:
- a step (E150) of searching said approximate area (ZIC) for constants of the size of a pointer and, when said constants are identified, a step of searching:
- for a said first constant (@LIMₘᵢₙ) corresponding to the smallest address of the first group of addresses (G₁) or to the address preceding the first group of addresses (G₁); and
- for a said second constant (@LIMₘₐₓ) corresponding to or following the largest address (@MCₘₐₓ) of the approximate area (ZIC);
- a step (E160) of delimiting said approximate area (ZIC) by way of said first constant (@LIMₘᵢₙ) and said second constant (@LIMₘₐₓ) except for if binary code representative of data exists between this first constant (@LIMₘᵢₙ) and the smallest address of said first group of addresses (G₁) or between the largest address (@MCₘₐₓ) of the approximate area (ZIC) and said second constant (@LIMₘₐₓ) .

8. Method according to any one of Claims 1 to 7, in which said core is executed in the random access memory of a virtual machine (MV).

9. Device (10) for detecting an approximate area (ZIC) occupied by the computer code of a core of an operating system in a memory, said area (ZIC) comprising one or more ranges (ZC) in said memory, the device comprising a module capable of implementing a detection method according to any one of Claims 1 to 8.

10. Device according to Claim 9 comprising a virtual machine (MV) and a hypervisor (HYP), **characterized in that** said module is implemented by said hypervisor (HYP) in order to implement a detection method according to Claim 8, in order to detect the approximate area (ZIC) occupied by the computer code of the core of an operating system when it is executed in the random access memory of said virtual machine.

11. Computer program comprising instructions for executing the steps of the detection method according to any one of Claims 1 to 8 when said program is executed by a computer.

12. Computer-readable storage medium (15) on which is stored a computer program comprising instructions for executing the steps of the detection method according to any one of Claims 1 to 8.
